# FASCICULE DE BREVET EUROPEEN

(11) **EP 1 053 213 B1**
(45) Date de publication et mention de la délivrance du brevet: **22.05.2002**
(21) Numéro de dépôt: 99901710.6
(22) Date de dépôt: 04.02.1999
(51) Int. Cl.: C04B 30/02, C08K 13/04, C08K 7/04

(54) **ASSOCIATION A BASE DE MICROFIBRILLES ET DE PARTICULES MINERALES, PREPARATION ET UTILISATIONS**
KOMBINATION AUS MICROFASERN UND MINERALTEILCHEN, HERSTELLUNG UND VERWENDUNGEN
ASSOCIATION BASED ON MICROFIBRILS AND MINERAL PARTICLES, PREPARATION AND USES

(30) Priorité: 11.02.1998 FR 9801805
(43) Date de publication de la demande: 22.11.2000
(73) Titulaire: RHODIA CHIMIE, 92408 Courbevoie Cédex (FR)
(72) Inventeur: AMICHE, Frédéric, F-93600 Aulnay-sous-Bois (FR); BOMAL, Yves, F-75018 Paris (FR); LADOUCE, Laurence, F-75012 Paris (FR)
(74) Mandataire: Dubruc, Philippe
(86) Numéro de dépôt international: FR9900240
(87) Numéro de publication internationale: WO9941210

(56) Documents cités:
- EP-A- 0 608 883
- EP-A- 0 783 015
- WO-A-91/05604
- WO-A-95/23824
- WO-A-97/15935
- FR-A- 2 739 383
- JP-A- 60 171 262
- JP-A- 61 007 374
- US-A- 3 861 963
- US-A- 4 107 845
- US-A- 4 250 064
- US-A- 4 578 826
- US-A- 4 952 278

## Description

La présente invention a pour objet une association, se présentant sous forme sèche, et comprenant d'une part des microfibrilles et d'autre part des particules minérales.

La présente invention concerne de même un mode de préparation ainsi que l'utilisation d'une telle association dans des compositions comprenant des polymères.

Par polymères, on entend désigner à la fois des polymères ou copolymères dont les élastomères, les polymères thermoplastiques, leurs alliages ou leurs mélanges.

Elle s'avère particulièrement intéressante dans le cas de compositions comprenant majoritairement des élastomères réticulés par tout moyen connu de l'homme de l'art (peroxydes, soufre, ...)..

L'utilisation de fibres dans différents domaines est connue, on peut citer notamment US 4,952,278 qui décrit l'incorporation de cellulose défibrillée dans du papier.

L'utilisation de fibres dans des compositions à base d'élastomères est connue mais reste peu développée. En effet, si l'introduction de fibres courtes, telles que des fibres Santoweb, dans de telles compositions permet d'améliorer la rigidité du matériau additivé par ces fibres courtes, elle en affecte néanmoins les résistances à la rupture et à la fatigue. Ainsi, on ne peut atteindre un compromis de propriétés satisfaisant.

Récemment, on a pensé préparer des compositions à base d'élastomères renfermant des fibres de plus petite taille, comme la pulpe de Kevlar comprenant des fibres partiellement défibrillées. Dans ce cas, les propriétés de rigidité sont améliorées par rapport à celles obtenues avec des fibres courtes, notamment pour ce qui a trait aux propriétés ultimes du matériau. Néanmoins, il semble que la résistance à la fatigue soit altérée. En outre, il existe un problème de redispersion de ces fibrilles au sein de la composition d'élastomères, qui rend obligatoire leur incorporation dans la composition alors que cette dernière se trouve sous la forme d'un latex.

Il apparaît donc qu'il est possible d'améliorer le compromis de propriétés en changeant la morphologie des fibres utilisées; mais dans ce cas, on se trouve confronté à un problème de redispersion de ces fibres au sein de la matrice polymérique.

La présente invention a notamment pour but de résoudre ce problème de redispersion.

Elle consiste en une association particulière, comprenant des microfibrilles, qui soit aisément dispersable dans des compositions de polymères, dont les élastomères ou les polymères thermoplastiques, quelle que soit la forme dans laquelle ces compositions se trouvent (latex ou non).

En outre, et cela constitue un avantage considérable de la présente invention, les compositions ainsi additivées, qui font également partie de l'invention, présentent des propriétés mécaniques très surprenantes. Ainsi, pour un élastomère vulcanisé (réticulé au soufre), on constate d'une part une augmentation significative du module sécant (rapport de la contrainte sur la déformation) et de la contrainte, plus particulièrement entre environ 50 à 300 % de déformation. Et, contrairement à ce que l'on était en droit de s'attendre, dans ce cas, les propriétés ultimes du matériau ainsi additivé, telle que la résistance à la rupture par exemple, ne sont pas altérées. D'autre part, le comportement viscoélastique du matériau obtenu est tout aussi surprenant. L'homme de l'art s'attendait à observer une augmentation de la dissipation d'énergie après additivation par des microfibrilles. Ce n'est pas le cas lorsqu'elles sont incorporées dans l'élastomère au moyen de l'association selon l'invention.

Ainsi, la présente invention a pour objet une association se présentant sous forme sèche, et comprenant:
- des microfibrilles dont le diamètre moyen est inférieur à 0,8 µm, et présentent un rapport longueur/diamètre UD supérieur ou égal à 15, et
- au moins une particule minérale.

Un autre objet de la présente invention est constitué par un procédé d'obtention de cette association, consistant à préparer une suspension comprenant les microfibrilles et au moins une particule minérale, que l'on sèche ensuite.

La présente invention a de même pour objet l'utilisation de l'association selon l'invention dans les polymères, en particulier dans les élastomères et les polymères thermoplastiques, leurs alliages ou leurs mélanges.

Enfin, l'invention concerne les articles à base de polymères comprenant l'association selon l'invention.

Il a été trouvé de manière totalement inattendue qu'une association à base de microfibrilles telles que définies ci-dessus, combinées à des particules minérales, pouvait être incorporée facilement et de manière homogène dans des formulations à base d'élastomères ou de polymères.

En effet, l'association selon invention est très facile de mise en oeuvre, étant donné le fait qu'elle se trouve sous une forme sèche, c'est-à-dire solide, et plus particulièrement sous forme solide individualisés (poudre, billes sensiblement sphériques, granulés). De plus, l'association peut être incorporée dans une composition de polymères, pour laquelle ledit polymère se trouve indifféremment sous forme de polymère en masse, ou sous forme d'une solution ou d'une suspension.

On a de même constaté, et cela de façon inattendue, que la présence de microfibrilles associées à des particules minérales conduisait à une baisse significative de la valeur du maximum de la tangente de l'angle de perte tan δ, sous une déformation inférieure à 50% à température ambiante, c'est-à-dire environ 20°C.
Il est rappelé que le maximum de la tangente de l'angle de perte correspond au maximum de la courbe obtenue en déterminant le rapport des modules E" (module visqueux) et E' (module élastique) en fonction de la déformation sous sollicitation sinusoïdale de l'échantillon.

La tangente δ donne une indication de la capacité du matériau à dissiper de l'énergie. Plus sa valeur est élevée, plus la dissipation d'énergie au sein du matériau est importante.

Dans les systèmes connus comprenant par exemple des latex et des microfibres, il a été remarqué une baisse de rigidité dès des déformations de 1 à 5 %. Ce phénomène a été attribué à la rupture du réseau de microfibres percolées, c'est à dire à un endommagement qui devrait s'accompagner d'une dissipation d'énergie.

Dans le cas de la présente invention, l'homme de l'art s'attendait donc à observer une augmentation de la dissipation d'énergie résultant de ce même phénomène. Mais tel n'a pas été le cas.

On a observé, en outre, un phénomène supplémentaire intéressant lié à la valeur maximale de la tan δ, au passage de la température de transition vitreuse mécanique (ou température de relaxation principale a). Cette valeur de tan δ est obtenue à partir de la courbe mesurant l'évolution des modules réels E' et imaginaires E" en fonction de la température, à fréquence constante, dans un domaine de faible déformation sinusoïdale (inférieure à 0,1%).

L'homme de l'art se serait normalement attendu, comme c'est habituellement le cas lorsqu'on introduit une charge dans un polymère, à observer une baisse de la valeur maximale de tan δ. Or, on a remarqué que bien au contraire: cette valeur était au moins conservée, sinon augmentée.

Mais d'autres avantages et caractéristiques de la présente invention apparaîtront plus clairement à la lecture de la description, des exemples et de la figure qui vont suivre.

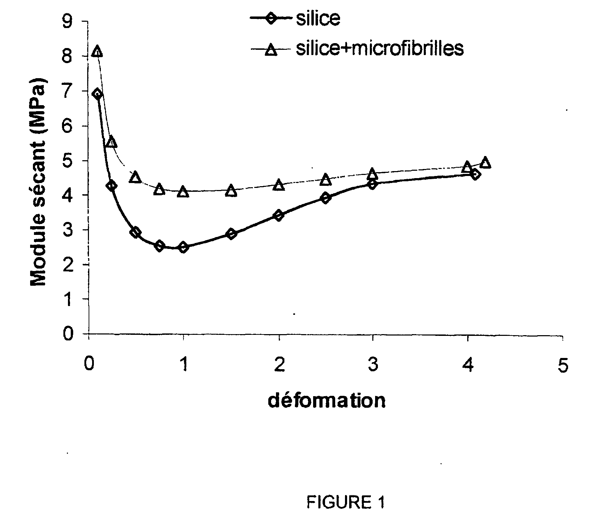

A noter que la figure 1 représente l'évolution du module sécant en fonction de la déformation, d'une composition d'élastomère vulcanisé comprenant l'association selon l'invention, et d'une composition à base d'élastomère vulcanisé ne comprenant que des particules minérales.

La figure 2 représente l'évolution du rapport E"/E' en fonction de la déformation, permettant d'accéder à tan δ.

La figure 3 représente l'évolution du module réel E' en fonction de la déformation.

Comme cela a été indiqué auparavant, l'association selon l'invention comprend des microfibrillés présentant un diamètre moyen inférieur à 0,8 µm.

De manière avantageuse, les microfibrilles présentent un diamètre moyen inférieur à 0,5 µm. Le diamètre moyen est plus particulièrement inférieur à 0,1 µm, de préférence inférieur à 0,05 µm. Le diamètre moyen des microfibrilles est préférentiellement compris entre 0,5 et 20 nm, et encore plus préférentiellement compris entre 5 et 20 nm.

Une caractéristique importante des microfibrilles de l'invention est leur facteur de forme qui est défini par le rapport entre la longueur moyenne de la microfibrille et D son diamètre moyen (L/D). Ainsi, dans le cadre de la présente invention, les microfibrilles présentent un rapport UD supérieur ou égal à 15, plus particulièrement supérieur ou égal à 20, de préférence supérieur ou égal à 100.

Le choix des microfibrilles, notamment en terme de diamètre et de facteur de forme, doit être tel que la longueur moyenne desdites microfibrilles reste toujours inférieure à 30 µm.

Le diamètre moyen peut être mesuré, par exemple, par microscopie électronique à transmission (MET). Selon les dimensions de la fibre, la longueur moyenne peut être déterminée, par exemple, par microscopie électronique à balayage (MEB) ou par microscopie électronique à transmission (MET).

Selon un mode de réalisation préféré de l'invention, l'association comprend des microfibrilles présentant un diamètre moyen inférieur à 0,8 µm et un rapport UD supérieur ou égal à 15, plus particulièrement supérieur ou égal à 20, de préférence supérieur ou égal à 100. Bien entendu, la longueur moyenne des microfibrilles est inférieure à 30 µm.

Un autre mode de réalisation encore plus préféré de l'invention consiste à mettre en oeuvre des microfibrilles présentant un diamètre moyen compris entre 0,5 et 20 nm. Plus particulièrement, le diamètre moyen est compris entre 5 et 20 nm. Le facteur de forme est supérieur ou égal à 15, plus particulièrement supérieur ou égal à 20, de préférence supérieur ou égal à 100. Evidemment la longueur moyenne des microfibrilles est inférieure à 30 µm

Les sources de microfibrilles présentant les caractéristiques indiquées auparavant sont très variées.

Selon une première possibilité, elles sont choisies parmi les microfibrilles céramiques. Par exemple, on peut citer les microfibrilles de carbure de silicium, de nitrure de silicium, de nitrure de bore.

Conviennent aussi les fibres d'amiante, de titanate, d'alumine ou de dihydroxycarbonate d'aluminium, et/ou de magnésium.

Une deuxième possibilité consiste à mettre en oeuvre des microfibrilles de carbone, éventuellement creuses.

Selon une troisième possibilité, les microfibrilles mises en oeuvre sont microfibrilles organiques. A titre d'exemple, on peut citer des microfibrilles d'alcool polyvinylique, de polyamide, de cellulose.

Dans le cas où les microfibrilies sont des microfibrilles de cellulose, elles peuvent être d'origine végétale, comme la cellulose issue de parenchyme végétal ; d'origine bactérienne ; ou encore d'origine animale, comme la cellulose telle que la tunicine, obtenue à partir d'animaux marins.

Selon une variante particulièrement intéressante de l'invention, l'association comprend des microfibrilles de cellulose essentiellement amorphes. Par essentiellement amorphes, on désigne des microfibrilles présentant un taux de cristallinité inférieur ou égal à 50 %. De préférence, ce taux est inférieur à 50 %. Le taux de cristallinité est encore plus préférentiellement supérieur ou égal à 15 % et inférieur à 50 %.

Les microfibrilles de cellulose mises en oeuvre dans la présente invention sont plus particulièrement issues de cellules constituées d'au moins 80% en poids de parois primaires. De préférence, la quantité de parois primaires est d'au moins 85 % en poids.

On a de telles caractéristiques notamment avec des cellules de parenchyme. La pulpe de betterave sucrière, les citrus comme les citrons, les oranges, les pamplemousses, et la plupart des fruits et des légumes constituent des exemples de parenchyme.

Par ailleurs, les microfibrilles de cellulose sont, selon une variante particulièrement avantageuse, chargées en surface en acides carboxyliques et en polysaccharides acides, seuls ou en mélange.

Par acides carboxyliques, on entend les acides carboxyliques simples, ainsi que leurs sels. Ces acides sont de préférence choisis parmi les acides uroniques. Plus particulièrement, lesdits acides uroniques sont plus particulièrement l'acide galacturonique, l'acide glucuronique.

En tant que polysaccharides acides, on peut citer les pectines, qui sont plus particulièrement des acides polygalacturoniques. Ces polysaccharides acides peuvent être présents en mélange avec des hémicelluloses.

De telles microfibrilles de cellulose ont été décrites dans la demande de brevet européen EP 726 356.

II est à noter que l'on ne sortirait pas du cadre de la présente invention en mettant en oeuvre des microfibrilles de cellulose qui ne possèdent pas de telles charges en surface, comme celles obtenues selon le procédé décrit dans le brevet EP 102 829. Par ailleurs, il serait tout aussi envisageable de mettre en oeuvre des microfibrilles de cellulose de ce type, mélangées à des acides carboxyliques et/ou polysaccharides acides tels que décrits ci-dessus.

Selon une autre possibilité, les microfibrilles de cellulose peuvent être mélangées à au moins un acide choisi parmi les acides dithiodipropionique, tétrathiodipropionique ou mercaptopropionique.

Selon un mode de réalisation particulièrement avantageux de la présente invention, les microfibrilles de cellulose sont obtenues en mettant en oeuvre le traitement qui va être décrit ci-dessous. Plus particulièrement, ce traitement est effectué sur de la pulpe de végétaux à parois primaires, comme par exemple de la pulpe de betterave après que celle-ci a subi une étape d'extraction préalable du saccharose, selon les méthodes connues de la technique.

Ce procédé consiste donc à mettre en oeuvre les étapes suivantes:
(a) première extraction acide ou basique, à l'issue de laquelle on récupère un premier résidu solide,
(b) éventuellement seconde extraction effectuée dans des conditions alcalines du premier résidu solide, à la suite de quoi, est récupéré un second résidu solide,
(c) lavage du premier ou du second résidu solide,
(d) éventuellement blanchiment du résidu lavé,
(e) dilution du troisième résidu solide obtenu à l'issue de l'étape (d) de manière à obtenir un taux de matières sèches compris entre 2 et 10 % en poids,
(f) homogénéisation de la suspension diluée.

Il est à noter que ce procédé a été décrit en détails dans la demande de brevet européen EP 726 356 déposée le 07/02/96, on pourra donc s'y référer si nécessaire. L'exemple 20 de ce texte donne notamment un mode de préparation de suspension de microfibrilles de cellulose essentiellement amorphes particulièrement avantageuses.

Les microfibrilles de cellulose entrant dans l'association selon l'invention peuvent être employées sous la forme d'une suspension directement issue du procédé de préparation des microfibrilles.

Elles peuvent aussi, de manière avantageuse, être employées sous une forme sèche. Dans ce cas, elles seront redispersées avant de les mettre en contact avec les particules minérales.

Notons que dans le cas de microfibrilles de cellulose, une forme sèche désigne des microfibrilles de cellulose présentant une teneur en matières sèches d'au moins 40 % en poids. Plus particulièrement, la teneur en matières sèches est d'au moins 60 %, de préférence, elle est d'au moins 70 % en poids.

Les microfibrilles de cellulose entrant dans l'association selon l'invention peuvent être éventuellement additivées avec au moins un additif choisi par exemple parmi la cellulose carboxylée, les polysaccharides naturels, les polyols.

Dans le cas où les microfibrilles de cellulose sont employées sous une forme sèche, elles sont de préférence associées à au moins un additif choisi parmi la cellulose carboxylée, les polysaccharides naturels, les polyols.

La cellulose carboxylée employée comme additif est, plus particulièrement, de la cellulose carboxyméthylée. La cellulose est un polymère constitué d'unités monomériques de glucose. Le groupement carboxylé est introduit de manière connue en soi, en faisant réagir l'acide chloro-acétique avec la cellulose. Le degré de substitution correspond au nombre de groupements carboxyméthylés par unité de glucose. Le degré théorique maximal est de 3. Le degré de substitution de la cellulose carboxyméthylée peut être soit inférieur ou égal à 0,95 (bas degré de substitution), soit supérieur à 0,95 (haut degré de substitution). Il est tout à fait envisageable de mettre en oeuvre des microfibrilles de cellulose comprenant à la fois les deux catégories de cellulose carboxyméthylée.

L'additif peut aussi être un polysaccharide naturel. Ce dernier peut être d'origine bactérienne, animale ou végétale. Les polysaccharides sont des polymères comprenant des unités osidiques. De préférence, on met en oeuvre des polysaccharides se trouvant sous une forme anionique ou non ionique.

Parmi les polysaccharides anioniques convenables, on peut mentionner sans intention de s'y limiter, la gomme xanthane, les succinoglycanes, les carraghénanes, les alginates ; la gomme xanthane étant préférée.

A titre de polysaccharides non ioniques, on peut citer par exemple les galactomannanes comme la gomme de guar, la gomme de caroube. Conviennent aussi l'amidon et ses dérivés non ioniques, de même que les dérivés non ioniques de la cellulose.

Parmi les polyols convenables, on peut citer tout particulièrement les alcools polyvinyliques, les polyalkylène glycols (polyéthylène glycol, polypropylène glycol, mélange et copolymères).

Les microfibrilles, si elles sont additivées, peuvent comprendre, en outre, au moins un co-additif choisi parmi:
- les monomères ou oligomères osidiques,
- les composés de formule (R¹R²N)COA, formule dans laquelle R¹ ou R², identiques ou différents, représentent l'hydrogène ou un radical alkyle en C₁-C₁₀, de préférence en C₁-C₅, A représente l'hydrogène, un radical alkyle en C₁-C₁₀, de préférence en C₁-C₅, ou encore le groupement R'¹R'²N avec R'¹, R'², identiques ou différents, représentant l'hydrogène ou un radical alkyle en C₁-C₁₀, de préférence en C₁-C₅,
- les tensioactifs cationiques ou amphotères,
ces co-additifs pouvant être utilisés seuls ou en mélange.

Parmi les monomères ou oligomères osidiques, on peut citer tout particulièrement et sans intention de se limiter, le sorbitol, le saccharose, le fructose.

En ce qui concerne les composés du type (R¹R²N)COA, on préfère utiliser les composés comprenant deux fonctions amides. De préférence on utilise l'urée.

Parmi les tensioactifs cationiques, on peut citer les dérivés cationiques d'ammonium quaternaires, comme par exemple les dérivés cationiques d'imidazoline, les halogénures d'alkyltriméthylammonium, de dialkyldiméthylammonium, d'alkyldiméthyl-benzylammonium. d'alkyldiméthyléthylammonium, les Esters Quat.

Parmi les tensioactifs amphotères, on peut citer sans intention de se limiter, les dérivés amphotères d'alkylpolyamines, les alkylbétaïnes, les alkyldiméthylbétaïnes, les alkylamidopropylbétaïnes, les alkylamidopropyl-diméthylbétaïnes, les alkyltriméthylsulfobétaïnes, les dérivés d'imidazoline tels que les alkylamphoacétates, alkylamphodiacétates, alkylamphopropionates, alkylamphodipropionates, les alkylsultaïnes ou les alkylamidopropyl-hydroxysultaïnes, les produits de condensation d'acides gras et d'hydrolysats de protéines, ces composés pouvant être utilisés seuls ou en mélange.

Les teneurs en additif et en co-additif, si ce dernier est présent, peuvent varier dans de larges limites. Cependant, dans le cas de microfibrilles de cellulose essentiellement amorphes, on préfère que les teneurs totales en additif et éventuellement en co-additif ne soient pas plus élevées que 50 % en poids par rapport au poids de microfibrilles de cellulose, d'additifs et éventuellement de co-additifs. De préférence, les teneurs sont inférieures ou égales à 30 % en poids par rapport au poids de microfibrilles de cellulose, d'additif et éventuellement de co-additif.

Mais les caractéristiques de telles microfibrilles de cellulose se présentant sous forme sèche, ainsi que leur préparation sont décrites dans les demandes WO 98/02486 et WO 98/02487, auxquelles on pourra se référer pour plus de détails.

Il est de même envisageable de mettre en oeuvre des microfibrilles de cellulose ayant fait l'objet d'un traitement de surface.

Ainsi, à titre d'exemple, on peut citer le procédé décrit dans WO 97/12917. Il y est décrit des microfibrilles de cellulose caractérisées par le fait qu'au moins 25 % en nombre des fonctions hydroxyles présentes à la surface de celles-ci sont estérifiées par au moins un composé organique comprenant au moins une fonction pouvant réagir avec les groupes hydroxyles de la cellulose.

Le procédé de préparation de telles microfibrilles à surface modifiée consiste à:
(a) disperser les microfibrilles de cellulose dans un milieu liquide et non déstructurant de la microfibrille de cellulose,
(b) ajouter dans la dispersion un agent estérifiant des fonctions hydroxyles de la cellulose, et éventuellement un catalyseur et/ou un activateur de la réaction d'estérification,
(c) arrêter la réaction d'estérification après obtention du degré d'estérification souhaité,
(d) extraire les microfibrilles partiellement estérifiées de la dispersion.

L'agent d'estérification est plus particulièrement un composé organique choisi dans le groupe comprenant les anhydrides ou halogénure d'acide acétique, propionique, butyrique, acrylique, méthacrylique et les acides correspondants. Il pourrait de même être envisageable de mettre en oeuvre un tel procédé avec au moins un acide choisi parmi les acides dithiodipropionique, tétrathiodipropionique ou mercaptopropionique.

Le catalyseur de la réaction d'estérification est choisi dans le groupe comprenant les catalyseurs basiques et les catalyseurs acides, et plus particulièrement les acides minéraux, organiques et les amines tertiaires.

Il est de même possible de mettre en oeuvre des microfibrilles, et notamment des microfibrilles de cellulose, traitées en surface de telle sorte qu'elles portent un revêtement de polypyrrole. Le procédé comprend les étapes suivantes:
(a) on met en contact dans l'eau distillée, une suspension colloïdale de microfibrilles, du pyrrole, du chlorure ferrique,
(b) on laisse réagir à une température comprise entre 5°C et la température ambiante,
(c) on lave les solides obtenus et l'on disperse dans l'eau au moyen d'ultrasons les solides résultants.
Ce procédé a notamment été décrit dans la demande européenne EP 783 015.

Bien évidemment, on ne sortirait pas du cadre de la présente invention, en mettant en oeuvre des microfibrilles de différents types.

Les microfibrilles ainsi définies, sont donc associées à au moins une particule minérale.

Les microfibrilles peuvent être associées à une ou à un mélange de particules minérales.

La granulométrie des particules minérales varie dans un large domaine. Cependant, on met en oeuvre des particules minérales qui, lors de l'utilisation de l'association dans la matrice polymère, permettent d'obtenir des particules dispersées d'un diamètre moyen allant de quelques nanomètres à plusieurs microns. Par exemple, le diamètre moyen peut être compris entre 3 nm et 10 µm, et de préférence entre 3 nm et 5 µm.

Selon une première variante, les particules minérales sont choisies parmi les oxydes, hydroxydes, hydroxycarbonates, ou leurs combinaisons, d'éléments des colonnes IIA, IIB, IIIB, IVA, IVB, VB de la classification périodique des éléments (parue dans le Supplément au Bulletin de la Société Chimique de France, N°1, Janvier 1966), de préférence le titane, l'aluminium, le silicium, le zinc, le calcium, le magnésium, ou leurs mélanges.

Comme combinaisons possibles, on peut citer, sans l'intention de s'y limiter, notamment le mica, les silicoaluminates comme les argiles, telles que le kaolin, par exemple.

Il est à noter que celles-ci peuvent être mises en oeuvre à partir d'une forme sèche que l'on redisperse avant ou lors de leur utilisation pour préparer l'association selon l'invention. On peut de même utiliser des suspensions directement issues du procédé de préparation desdites particules minérales, généralement mettant en oeuvre une étape de précipitation. Opérer de la sorte permet de s'affranchir de l'étape de redispersion des particules.

Ainsi, il est tout à fait envisageable de mettre en contact les microfibrilles avec une suspension de particules d'oxydes, d'hydroxydes et/ou d'hydroxycarbonate, après ladite étape de précipitation, ou bien après l'étape de filtration et de remise en suspension (délitage mécanique ou chimique).

Il est de même possible d'employer des oxydes, hydroxydes et/ou hydroxycarbonates ayant subi un traitement à haute température (calcination). Dans ce cas, les microfibrilles sont introduites après cette étape de calcination, afin d'éviter toute dégradation de ces dernières.

Selon une deuxième variante, les particules minérales sont choisies parmi les carbonates, hydrogénocarbonates, phosphates de métaux alcalins ou alcalino-terreux, ou leurs mélanges. De préférence, on met en oeuvre des composés de métaux alcalino-terreux, et plus particulièrement des composés du calcium et du magnésium.

Une troisième variante est constituée par des particules minérales choisies parmi les composés du cérium ou du lanthane. A ce titre on peut citer notamment les sulfures, les oxydes, ou leurs mélanges.

Une quatrième variante est constituée par des particules de carbure de silicium.

Bien évidemment, on ne sortirait pas du cadre de la présente invention en utilisant plusieurs types de particules minérales dans l'association selon l'invention.

Enfin, une cinquième variante de l'invention consiste à mettre en oeuvre, à titre de particules minérales, des particules de noir de carbone, même si la qualification de "minérale" de ces particules, représente plutôt un abus de langage.

Notons que l'on ne sortirait pas non plus du cadre de l'invention, en mettant en oeuvre des particules comprenant du carbone dans leur molécule, recouvertes par au moins un composé correspondant au quatre variantes précitées, c'est-à-dire par au moins un composé choisi parmi les oxydes, hydroxydes ou hydroxycarbonates d'éléments des colonnes IIA, IIB, IIIB, IVA, IVB, VB de la classification périodique des éléments ; les carbonates, les hydrogénocarbonates, les phosphates de métaux alcalins ou alcalino-terreux; ou encore le carbure de silicium.

Selon un mode de réalisation particulier de la présente invention, on met en oeuvre des particules minérales présentant une surface spécifique BET supérieure à 30 m²/g, plus particulièrement comprise entre 50 et 400 m²/g. Il est à noter que la surface spécifique BET est déterminée selon la méthode de Brunauer-Emmet-Teller, décrite dans "The Journal of the American Society", Vol. 60, page 309, Février 1938 et correspondant à la norme NF T 45007 (Novembre 1987). De préférence, les particules mises en oeuvre dans l'invention présentent une surface spécifique comprise entre 80 et 250 m²/g. Un mode de réalisation particulièrement avantageux, consiste à mettre en oeuvre des particules minérales choisies parmi les oxydes, hydroxydes ou hydroxycarbonates présentant une surface spécifique dans le domaine indiqué auparavant. Selon un mode de réalisation encore plus avantageux de l'invention, les particules minérales sont choisies parmi les silices précipitées, plus particulièrement présentant une surface spécifique comprise entre 110 et 230 m²/g, et par exemple entre 140 et 220 m²/g.

Par ailleurs, des particules minérales ayant fait l'objet d'un traitement de surface préalable, total ou partiel, peuvent être mises en oeuvre. A titre d'exemple, on peut citer les traitements de surface effectués sur du dioxyde de titane par de la silice ou un silicoaluminate, ou encore le traitement effectué sur de la silice par du polyéthylène glycol. On peut de même citer le traitement partiel de la surface de particules de carbonate de calcium avec un acide carboxylique.

La quantité de microfibrilles dans l'association est d'une manière avantageuse comprise entre 0,1 et 100 g, plus particulièrement entre 1 et 10 g, par rapport à 100 g de particules minérales. De préférence, une telle teneur est comprise entre 2 et 5 g pour 100 g de particules minérales.

. Dans le cas où les microfibrilles comprennent des additifs ou co-additifs, les gammes indiquées ci-dessus restent valables, à ceci prêt qu'il s'agit de la teneur totale en microfibrilles et en additifs et co-additifs.

Un procédé de préparation de composition selon l'invention va maintenant être décrit. Il consiste à préparer une suspension comprenant les microfibrilles et les particules minérales précitées, que l'on sèche ensuite.

Ainsi, dans une première étape, on prépare une suspension comprenant les microfibrilles, éventuellement en présence d'additifs ou de co-additifs, et les particules minérales.

Classiquement, on prépare une suspension dans l'eau. Cependant, il est possible de remplacer en tout ou partie l'eau par un liquide dispersant, inerte vis-à-vis des particules minérales et des microfibrilles, de préférence ne les solubilisant pas. En outre, on choisit ce dispersant de manière à ce qu'il soit compatible avec les conditions de séchage de la suspension. On peut utiliser plus particulièrement des alcools tels que l'éthanol, le méthanol.

Habituellement, la teneur en matières sèches de la suspension ainsi obtenue, comprenant les microfibrilles et les particules minérales, est comprise entre 10 et 40 % en poids.

Bien que cela ne soit pas obligatoire, il peut être préférable de mettre en oeuvre une étape d'homogénéisation ou tout traitement permettant une désagglomération des particules et microfibrilles, comme le broyage humide, les ultrasons par exemple.

En outre, il peut être avantageux d'introduire dans la suspension un stabilisant. A ce titre, on peut citer les hydrocolloïdes.

Une fois la suspension obtenue, on effectue un séchage de cette dernière.

Tout moyen classique peut être employé dans la mesure où la température atteinte par l'association durant le séchage, n'entraîne pas de dégradation des éléments qui la constituent.

A titre d'illustration, le séchage est effectué dans des conditions telles que la température atteinte par l'association microfibrilles/particuies minérales, est comprise entre la température ambiante et une température inférieure à 170°C, plus particulièrement inférieure à 150°C et de préférence, inférieure à 120°C.

Le séchage est généralement réalisé sous air, mais il est possible de le réaliser sous une atmosphère inerte (azote, gaz rares).

Ainsi, on peut sécher la suspension dans tout type d'appareil connu, comme les fours sur tapis roulant, à induction ou non, radiatifs ou non, des fours rotatifs, des lits fluidisés ou encore des lyophilisateurs.

Selon un mode de réalisation particulier de l'invention, on peut effectuer le séchage par atomisation, c'est à dire par pulvérisation de la suspension dans une atmosphère chaude (spray-drying). L'atomisation peut être réalisée au moyen de tout pulvérisateur connu en soi, par exemple par une buse à pression liquide, ou autre. On peut également utiliser des atomiseurs dits à turbine. Sur les diverses techniques de pulvérisation susceptibles d'être mises en oeuvre dans le présent procédé, on pourra se référer notamment à l'ouvrage de base de MASTERS intitulé "SPRAY-DRYING" (deuxième édition, 1976, Editions George Godwin - London).

On notera que l'on peut également mettre en oeuvre l'opération de séchage par atomisation au moyen d'un réacteur "flash", par exemple du type décrit notamment dans les demandes de brevet français n° 2 257 326, 2 419 754 et 2 431 321. Dans ce cas, les gaz traitants (gaz chauds) sont animés d'un mouvement hélicoïdal et s'écoulent dans un puits-tourbillon. Le mélange à sécher est injecté suivant une trajectoire confondue avec l'axe de symétrie des trajectoires hélicoïdales desdits gaz, ce qui permet de transférer parfaitement la quantité de mouvement des gaz au mélange à traiter. Les gaz assurent ainsi en fait une double fonction : d'une part la pulvérisation, c'est à dire la transformation en fines particules, du mélange initial, et d'autre part le séchage des particules obtenues. Par ailleurs, le temps de séjour extrêmement faible (généralement inférieur à 1/10 de seconde environ) des particules dans le réacteur présente pour avantage, entre autres, de limiter d'éventuels risques de surchauffe par suite d'un contact trop long avec les gaz chauds. En ce qui concerne le réacteur flash mentionné plus haut, on pourra notamment se référer à la figure 1 de la demande de brevet français 2 431 321.

A l'issue de cette étape, on obtient l'association selon l'invention, se présentant sous forme sèche (solide). Il est à noter que l'association peut présenter une teneur résiduelle en eau ou liquide dispersant. Cette teneur résiduelle est telle que l'aspect de particules individualisées de l'association soit conservé. Elle dépend par conséquent fortement de la nature de chacun des éléments constituants de l'association. A titre d'exemple, cette teneur résiduelle est généralement inférieure ou égale à 20%, de préférence inférieure ou égale à 10%.

A ce stade, l'association obtenue par séchage peut se trouver sous la forme de billes sensiblement sphériques. Cette variante est particulièrement avantageuse lorsque les particules minérales sont choisies parmi les oxydes. On pourra se référer aux conditions décrites dans les demandes de brevets EP 520 862, EP 670 813, EP 670 814.

Le produit résultant peut, si nécessaire et de manière à limiter le phénomène de poussiérage, être mis en contact avec un mélange comprenant une huile minérale et éventuellement un polymère. L'huile minérale peut être, par exemple, une huile napthénique. Le polymère est de préférence un polymère ou copolymère d'éthylène, de propylène, et éventuellement d'un diène (tel que l'hexadiéne ou encore l'éthylidènenorbomène), dans lequel la teneur en éthylène est de 60 à 90 % en poids, la teneur en propylène de 10 à 35 % en poids et celle du diène, s'il est présent, de 2 à 10 % en poids. On pourra se reporter notamment à la demande internationale PCT/GB96/03222.

Le produit séché peut si nécessaire, subir une étape de broyage ou de désaggtomération.

Si on le souhaite, il est possible de mettre en oeuvre une étape de mise en forme du produit séché, pour le rendre plus pratique d'utilisation. Ainsi, il est possible d'effectuer entre autres, une granulation, une compaction, une extrusion.

Ces opérations sont parfaitement classiques pour l'homme de l'art. Elles consistent en général, dans le cas de la granulation ou de l'extrusion, à ajouter la quantité requise d'un liant qui est choisi parmi les composés compatibles avec les compositions dans lesquelles l'association est utilisée ultérieurement, à granuler ou extruder l'ensemble dans des appareillages' classiques, puis à sécher le produit résultant, si nécessaire.

Quant à la compaction, on la réalise habituellement en soumettant à une forte pression l'association, éventuellement en présence d'un liant approprié selon l'utilisation ultérieure de cette dernière.

A titre de liant, on peut citer notamment le polyéthylène glycol, l'acide stéarique.

L'association selon l'invention, éventuellement après mise en forme, se présente habituellement sous une forme sèche dont la taille des objets qui la composent est comprise entre 0,5 µm et 5 mm ; plus particulièrement entre 5 µm et 5 mm.

L'association selon l'invention peut être utilisée dans de nombreux domaines.

De manière avantageuse, l'association selon l'invention est utilisée dans les compositions à base de polymères ou de copolymères, notamment au titre de charges renforçantes. Dans la suite, on ne fera référence, pour des questions de simplification du texte, qu'à des polymères, sachant que par ce terme, on couvre à la fois les polymères, les copolymères, leurs alliages ou leurs mélanges.

Parmi les polymères convenables, on peut citer les élastomères, les polymères ou copolymères, présentant une température de transition vitreuse comprise entre -150°C et +20°C.

A titre de composés convenables, on pourra citer, sans toutefois avoir l'intention de s'y limiter, les élastomères ou (co)polymères de synthèse ou des produits naturels. Par exemple, on peut citer le caoutchouc naturel, les polymères ou copolymères dérivant de monomères aliphatiques ou aromatiques, comprenant au moins une insaturation, tels que, notamment, l'éthylène, le propylène, le butadiène, l'isoprène, le styrène ; le polyacrylate de butyle, ou leurs associations. Les élastomères silicones peuvent de même convenir à la réalisation de la présente invention, ainsi que les polymères halogénés, dont le PVC et les élastomères halogénés.

Selon la présente invention, on met en forme un mélange comprenant l'association microfibrilles et particules minérales, le polymère et le cas échéant des additifs adaptés à l'application. Ainsi, les compositions de polymères pourront comprendre, des ingrédients de vulcanisation dans le cas particulier des élastomères, des agents de couplages, des plastifiants, des stabilisants, des lubrifiants, des pigments, etc.

La proportion volumique représentée par l'association selon invention dans la composition de polymère peut varier dans une large gamme, voire, dans certaines applications, représenter une quantité plus élevée que de polymère. Cependant, à titre plus particulier, le volume de l'association selon invention représente 0,1 à 50 % par rapport au volume de polymère, éventuellement comprenant les additifs précités. De préférence, ce volume représente 0,1 à 25 % du volume de polymère, éventuellement comprenant les additifs précités.

Il est à noter, et cela constitue un avantage supplémentaire de la présente invention, que l'association selon l'invention peut être mise en oeuvre indifféremment avec un polymère en masse, avec un latex de polymère ou bien une solution de polymère. Il est précisé que par latex, on entend des suspensions de polymère dans l'eau ou tout autre liquide dispersant approprié.

En effet, contrairement aux agents à base de fibres ou de microfibrilles connus, l'association selon l'invention est parfaitement adaptée à la composition de polymère et s'y disperse parfaitement, quelle que soit la forme de la composition.

La mise en oeuvre et la mise en forme du polymère comprenant l'association selon l'invention sont classiques dans le domaine. Elles ne demandent pas de matériel ou procédures spécifiques.

Ainsi, dans le cas où l'élastomère n'est pas sous forme de latex, on prépare un mélange homogène de l'association selon l'invention, de l'élastomère et des additifs, au moyen, entre autres, de tout type de malaxeur connu suivant des procédures de mise en oeuvre bien connues de l'homme de l'art.

On met en forme ledit mélange par moulage ou extrusion notamment, et l'on effectue, si nécessaire, un traitement thermique à une température inférieure à la température de dégradation de l'association selon l'invention. C'est plus particulièrement le cas de la vulcanisation des élastomères. Habituellement, la température de l'opération est inférieure à 170°C.

Dans le cas où le polymère se présente sous forme de latex ou de solution, on effectue le mélange du latex ou de la solution, avec l'association selon l'invention, puis on élimine la phase liquide, de manière classique. Le produit résultant peut être ensuite mis en forme de manière classique.

Dans le cas où le polymère est un polymère thermoplastique, le mélange homogène de l'association, du polymère et des additifs peut être obtenu par tout moyen connu de l'homme de l'art permettant l'incorporation de charges minérales dans un polymère thermoplastique, en particulier au moyen d'une extrudeuse à double vis.

On met ensuite en forme ledit mélange par calandrage ou injection notamment.

Les articles à base de polymères et comprenant l'association selon l'invention, ainsi obtenus, peuvent être employés comme plastiques techniques ou élastomères techniques, dans des applications aussi variées que dans le domaine de l'automobile.

Ainsi, ils peuvent être employés en tant que revêtement de sols, support moteurs, pièce de chenilles de véhicules, semelle de chaussures, galet de téléphérique, joint d'appareillages électroménagers, gaine, câble, courroie de transmission.

Ainsi, la présente invention permet d'obtenir des articles dans lesquels le polymère est un élastomère ou un alliage ou mélange d'élastomères, et de préférence vulcanisé, qui peuvent être utilisés dans toute partie du pneumatique.

Dans ce cas particulier, il est à noter que la teneur en association selon l'invention est telle que la teneur en microfibrilles dans la partie concernée du pneumatique est comprise entre 0,1 et 20 g pour 100 g d'élastomères, de polymères ou copolymères.

Enfin, les articles selon l'invention peuvent trouver applications en tant que séparateur de batterie.

Des exemples concrets mais non limitatifs de l'invention vont maintenant être présentés.

### EXEMPLE 1

Cet exemple illustre la préparation d'une association selon l'invention, comprenant de la silice précipitée et des microfibrilles de cellulose.

On met en oeuvre l'exemple 12 du brevet européen EP 520 862, jusqu'à obtenir une bouillie de silice précipitée qui est filtrée et lavée au moyen d'un filtre presse de façon à récupérer un gâteau de silice dont la perte au feu est de 79% (21% de teneur en silice).

Ce gâteau est ensuite fluidisé par action mécanique et chimique via ajout d'une quantité d'aluminate de sodium correspondant à un rapport pondéral Al/SiO₂ de 3000 ppm. La suspension ainsi obtenue présente ainsi un pH de 6,3 et une teneur en silice précipitée proche de 21% en masse.

A 2641 g de la suspension ci-dessus, on ajoute 2419 g d'eau et de 1300 g de pulpe de microfibrilles de cellulose.

Cette pulpe est obtenue selon le procédé décrit dans la demande de brevet EP 726 356, conformément à l'exemple 20 avant concentration, à l'exception que la teneur en matières sèches de la suspension est de 2,3 %.

On homogénéise la suspension de silice et de microfibrilles avec un RAYNERI, pour obtenir une suspension avec une teneur en silice précipitée de 9 %. Le ratio massique microfibrilles/silice est de l'ordre de 5,4 %.

Cette suspension est atomisée sur atomiseur à turbine APV.

Le produit obtenu présente:
* une surface BET de 165 m²/g
* un volume poreux total de 3,2 ml/g
* un diamètre médian des pores de 24 nm.
NB: Le volume poreux est mesuré par porosimétrie au mercure, les diamètres des pores étant calculés par la relation de Washbum avec un angle de contact de 140° et une tension superficielle de 484 Dynes/cm. Les mesures de porosité sont faites sur des produits séchés à 150°C sous une pression de 1 Pa. Le volume poreux Vp est relatif aux pores dont le rayon est inférieur à 1 µm; le diamètre médian des pores correspond au maximum de la dérivée de la courbe V= f(log d) pour la partie relative aux mésopores (marche de porosité pour les pores de diamètre inférieur à 0,1 µm.

### EXEMPLE 2

Cet exemple a pour objet l'obtention de particules de silice précipitée seule (référence).

A 4797 g de suspension décrite dans l'exemple 1, on ajoute 6205 g d'eau afin de former une suspension présentant une teneur à 9 % en silice précipitée.

Cette suspension est atomisée sur un atomiseur à turbine APV dans les mêmes conditions que pour l'exemple précédent.

Le produit obtenu présente:
* une surface BET de 165 m²/g
* un volume poreux total de 3,5 ml/g
* un diamètre médian des pores de 25 nm.

On constate que les produits des exemples 1 et 2 présentent des texture et surface similaires.

### EXEMPLE 3

Cet exemple a pour objet l'évaluation des propriétés des élastomères comprenant les produits issus des exemples 1 (composition A - composition comportant l'association selon l'invention) et 2 (composition B - composition à base de silice précipitée seule).

On prépare deux compositions d'élastomères suivantes:

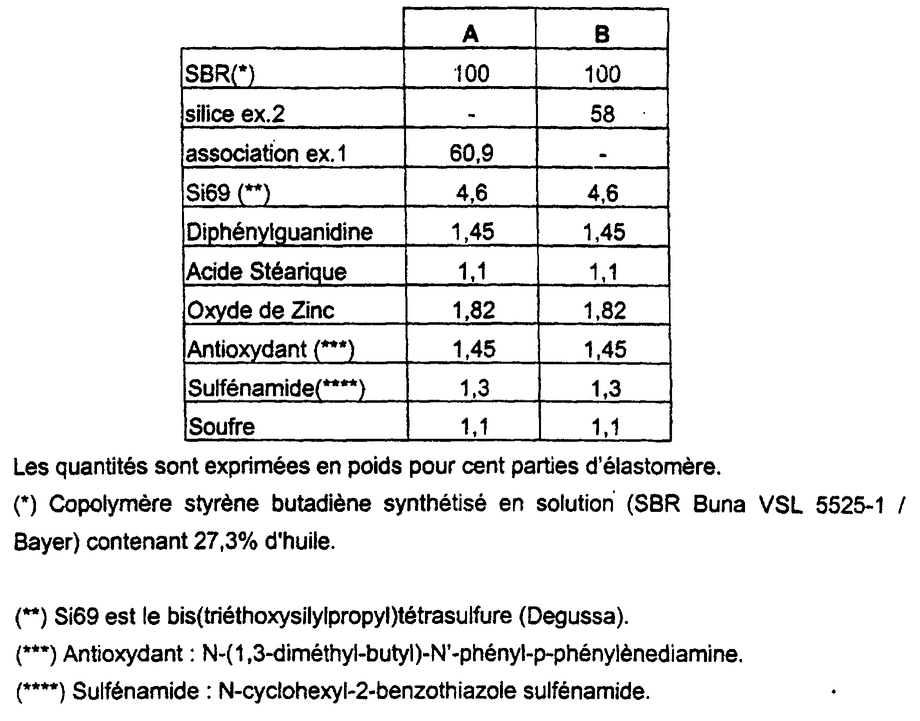

Chaque composition est réalisée par un travail thermo-mécanique dans un malaxeur interne de 1 litre, en deux étapes, pour une vitesse moyenne des palettes de 80 tours par minute, jusqu'à atteindre une température de 160°C à la fin de chacune de ces deux étapes, et suivies d'une étape de finition sur mélangeur externe. La vulcanisation des compositions est adaptée aux cinétiques de vulcanisation de chaque mélange.

Les propriétés physiques des mélanges sont consignées dans le tableau ci-dessous.

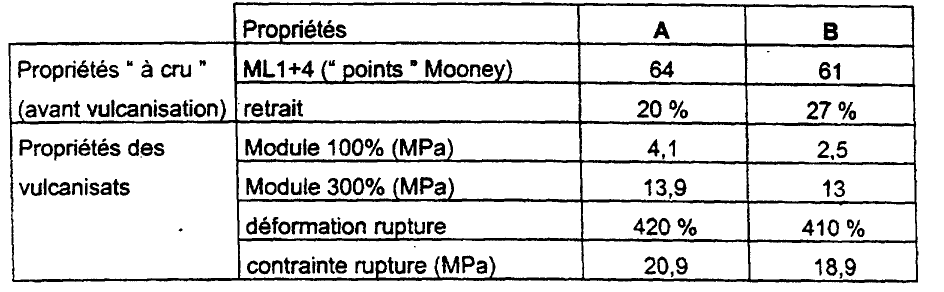

Les mesures sont effectuées selon les méthodes suivantes:

| | |
|---|---|
| •Viscosité Mooney | ML1+4 sur mélange cru selon la norme NF T43005 |
| | |
| •Retrait | |
| Appareillage | On utilise un mélangeur à cylindres MAL ATC 01 (en calandrage - vitesse cylindre avant -cylindre arrière est de 18 tours par minutes). |
| | Température : 20°C. |
| | Ecartement des guides : 10 cm, |
| | Ecartement des cylindres : 2 cm (bourrelet environ 1 cm). |
| Mode opératoire | Laisser manchonner 30 secondes 220g de mélanges. Couper 10 fois aux 2/3 (5 à gauche - 5 à droite). Au bout de 2 minutes, écarter les cylindres jusqu'à disparition complète du bourrelet. Coupler le mélange sur toute la largeur. Laisser reposer 24 heures la bande de caoutchouc sur une table talquée et mesurer la longueur de la bande. |
| | |
| | Le retrait est alors donné par (D-L)/D*100, formule dans laquelle D représente la circonférence du cylindre et L la longueur de la bande après 24 heures de repos. |
| | |
| Traction | les modules sont mesurés sur les vulcanisats selon la norme NF T46002. Il est à noter que le module à 100 %, dans les métiers du caoutchouc, fait référence à la contrainte mesurée à 100% de déformation en traction ; le module 300% fait référence à la contrainte mesurée à 300% de déformation en traction. |

D'après le tableau récapitulatif précédent, on constate que la composition contenant l'association de silice et de microfibrilles selon l'invention conduit à une contrainte mécanique nettement plus élevée autour de 100% de déformation par rapport à la composition de référence. Cela indique que les microfibrilles ont été réparties de manière homogène dans l'élastomère.

En outre, comme l'illustre la figure 1, montrant l'évolution du module sécant (défini comme le rapport de la contrainte à une déformation sur la déformation ) en fonction de la déformation, les modules sont améliorés jusqu'à plus de 300% de déformation.

Il est remarquable et tout à fait inattendu pour l'homme de l'art de constater que le gain en module de la composition d'élastomère comprenant l'association selon l'invention se produit sans nuire à la rhéologie du mélange cru, ni à la résistance à la rupture et à l'allongement du mélange vulcanisé.

Par ailleurs, le mélange ainsi obtenu présente une meilleure résistance au retrait que la composition témoin, ne comprenant que la silice, ce qui est un avantage en terme de mise en forme par extrusion ou calandrage en particulier.

### EXEMPLE 4

Cet exemple a pour objet de montrer l'influence de l'association selon l'invention sur l'évolution des propriétés viscoélastiques et en particulier de la tangente de l'angle de perte (tan δ) en fonction de la déformation et de la température.

Méthode de mesure : Les modules réel (E') et imaginaire (E") ainsi que la tangente de l'angle de perte (tan δ), définie comme le rapport de E" sur E', ont été mesurés à différents taux de déformation, sur un appareil de spectrométrie mécanique (Viscoanalyseur VA2000 de Metravib RDS).

Les conditions de l'essai sont les suivantes:
- Les éprouvettes sont de forme parallèlépipèdique (longueur 6 mm, largeur 6 mm, épaisseur 2,5 mm environ).
- A 23°C, on soumet l'éprouvette à un essai qui s'apparente à un essai de traction, consistant à soumettre l'éprouvette à des paliers de force donc de déformation croissants. Lors de chaque palier, une déformation sinusoïdale d'une fréquence de 5Hz et d'une amplitude de 10 microns est appliquée à l'éprouvette, permettant ainsi de mesurer les modules E'et E" et la tanδ.

On a donc testé après vulcanisation conformément au mode opératoire ci-dessus les compositions A et B décrites dans l'exemple 3.

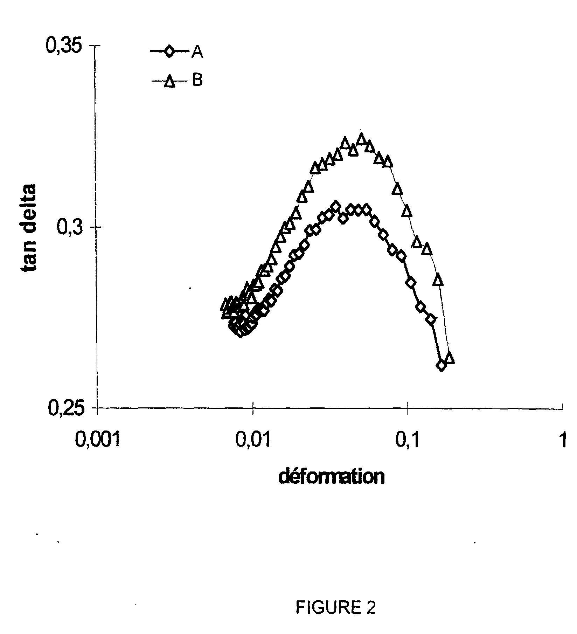

On constate, comme observé sur la figure 2, que la valeur maximale de tan δ de la composition A, contenant des microfibrilles de cellulose introduites dans l'élastomère au moyen de l'association selon l'invention, est de 0,30 alors que celle de la composition B est de 0,32.

Ce résultat est tout à fait inattendu. En effet dans les systèmes connus comprenant des latex et des microfibres, il a été remarqué une baisse de rigidité dès des déformations de 1 à 5 %. Ce phénomène est attribué par l'homme de l'art à la rupture d'un réseau de fibres percolées, donc à un endommagement. Cet endommagement s'accompagne normalement d'une dissipation d'énergie, donc d'une augmentation de tanδ.

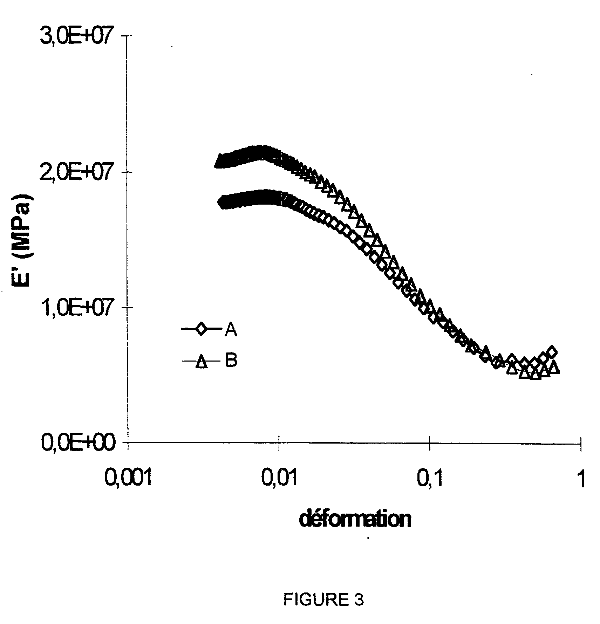

Notons de plus sur la figure 3, la valeur plus faible du module élastique E' de la composition A, à très faible déformation et l'augmentation de cette dernière à plus forte déformation par rapport aux valeurs obtenues avec la composition B.

On a observé en outre un phénomène supplémentaire intéressant lié à la valeur maximale de la tan δ, au passage de la température de transition vitreuse mécanique (ou température de relaxation principale α). Celle valeur de tan δ est obtenue à partir de la courbe mesurant l'évolution des modules réels E', imaginaires E" en fonction de la température à fréquence constante, dans un domaine de faibles déformations (inférieures à 0,1%).

On constate que la valeur maximale de tan δ au passage de la transition vitreuse mécanique (observation à 10Hz à une température de relaxation principale α) de la composition A est de 0,77 alors que celle de la composition B est de 0,76.
L'homme de l'art se serait normalement attendu à observer une baisse de la valeur maximale de tangente au passage de la transition vitreuse mécanique. Or on a remarqué que cette valeur était au moins conservée, voire augmentée.
Ce résultat est surprenant, car dans la composition A, la proportion de polymère qui franchit la transition vitreuse mécanique est plus faible à cause de l'addition de fibres, que dans la composition B.
On aurait donc dû observer une baisse de la valeur maximale de tan δ au passage de la transition vitreuse mécanique.

Le comportement tout à fait particulier de la composition A dans les exemples 2 et 3 indique, de façon évidente pour l'homme de l'art, qu'une association selon l'invention d'une charge minérale renforçante (par exemple une silice précipitée dispersible) et de microfibrilles de cellulose (par exemple des parenchymes de cellulose issues de produits végétaux) peut être utilisée de façon à améliorer le compromis de propriétés de pratiquement toutes les parties d'un pneumatique.

### EXEMPLE 5

Cet exemple a pour objet l'évaluation des propriétés des élastomères comprenant les produits issus des exemples 1 (composition C) et 2 (composition D) dans une formule à base de caoutchouc naturel et de polybutadiène.

On prépare deux compositions d'élastomères suivantes:

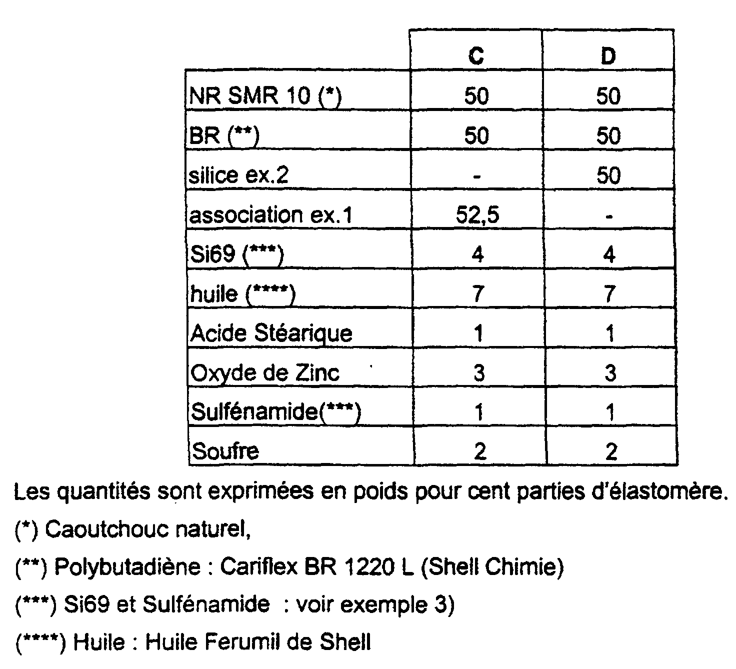

Chaque composition est réalisée par un travail thermo-mécanique dans un malaxeur interne de 1 litre, en une étape, pour une vitesse moyenne des palettes de 80 tours par minute, jusqu'à atteindre une température de 160°C en fin d'étape, et suivie d'une étape d'accélération et de finition sur mélangeur externe. La vulcanisation des compositions est adaptée aux cinétiques de vulcanisation de chaque mélange.

Les propriétés physiques des mélanges sont consignées dans le tableau ci-dessous.

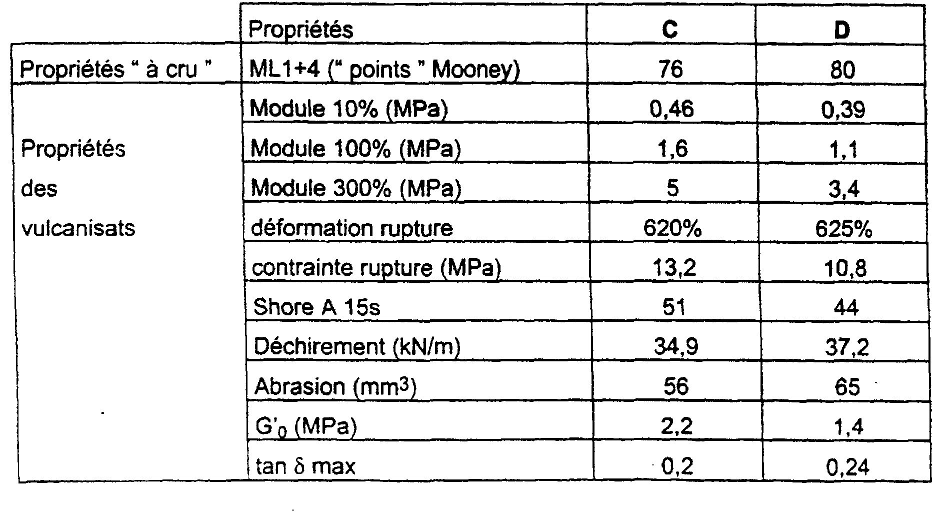

Les mesures sont effectuées selon les méthodes suivantes:

| | |
|---|---|
| •traction | comme dans l'exemple 3, selon la norme NF T46002 |
| | |
| •déchirement pantalon | selon la norme NF T46035 |
| •Abrasion | selon la norme NF T46012 |
| •G'₀ | module réel, mesuré par un essai de cisaillement simple dynamique réalisé à déformation croissante, à 5Hz et à 23°C. G'₀ est mesuré à 0.01% de déformation. |
| tan δ max | le maximum de la tangente de l'angle de perte, mesuré par un essai de cisaillement simple dynamique réalisé à déformation croissante, à 5Hz et à 23°C. tanδ max correspond à la valeur maximale atteinte par tanδ lors du balayage déformation. |

D'après le tableau récapitulatif, on constate que la composition contenant l'association de silice et de microfibrilles selon l'invention (composition C) conduit à des contraintes mécaniques nettement plus élevées à 10, 100 et 300% de déformation par rapport à la composition (D) de référence et à une résistance à l'abrasion et au déchirement significativement supérieures à la composition de référence.

Il est remarquable et tout à fait inattendu pour l'homme de l'art de constater que le gain en module de la composition d'élastomère comprenant l'association selon l'invention se produit sans nuire à la rhéologie du mélange cru ni à la résistance à la rupture et à l'allongement du mélange vulcanisé. Au contraire, on constate que la composition contenant l'association présente une viscosité plus faible que la composition de référence (D).

Par ailleurs, le mélange ainsi obtenu présente un comportement dynamique qui se distingue de celui de la composition de référence, ne comprenant que la silice, par une rigidité à faible déformation plus élevée et un maximum de dissipation plus faible, ce qui est un avantage dans les applications pneumatique, en particulier pour les flancs,

### EXEMPLE 6

Cet exemple a pour objet l'évaluation des propriétés des élastomères comprenant les produits issus des exemples 1 (composition E) et 2 (composition F) comparé à un élastomère comprenant du noir de carbone renforçant (composition G).

On prépare trois compositions d'élastomères suivantes:

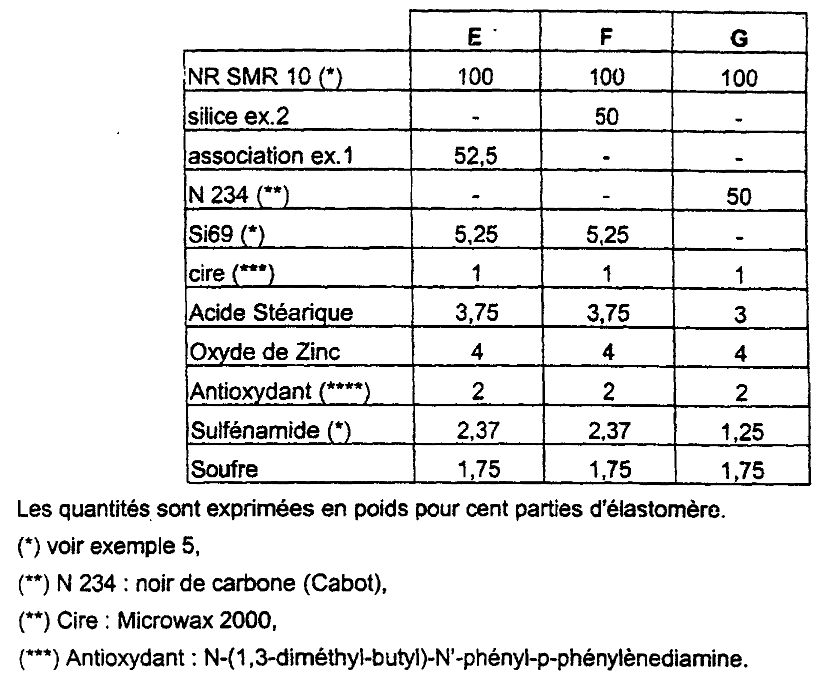

Chaque composition est réalisée par un travail thermo-mécanique dans un malaxeur interne de 1 litre, en une étape, pour une vitesse moyenne des palettes de 80 tours par minute, jusqu'à atteindre une température de 160°C en fin d'étape, et suivie d'une étape d'accélération et de finition sur mélangeur externe. La vulcanisation des compositions est adaptée aux cinétiques de vulcanisation de chaque mélange.

Les propriétés physiques des mélanges sont consignées dans le tableau ci-dessous.

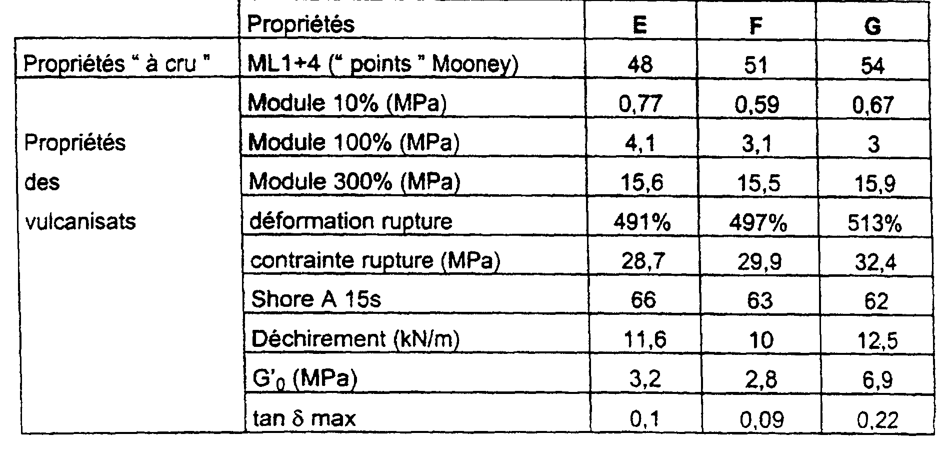

Les mesures sont effectuées selon les mêmes méthodes que dans l'exemple 5.

D'après le tableau récapitulatif, on constate que la composition contenant l'association de silice et de microfibrilles selon l'invention (composition E) conduit à une dureté et à des contraintes mécaniques nettement plus élevées à 10, 100 de déformation par rapport aux compositions (F et G) de référence et ce sans nuire à la rhéologie du mélange cru ni à la résistance à la rupture, à l'allongement à la rupture ou à la résistance au déchirement du mélange vulcanisé.

Par ailleurs, le mélange contenant l'association de silice et de microfibrilles (E) présente un comportement dynamique comparable à celui de la composition de référence à base de silice (F) mais qui se distingue de celui de la composition à base de noir de carbone (G) par une rigidité à faible déformation plus élevée et un maximum de dissipation plus faible, ce qui est un avantage dans les applications pneumatiques, en particulier pour les poids lourds.

## Revendications

1. Association se présentant sous forme sèche, comprenant:
- des microfibrilles dont le diamètre moyen est inférieur à 0,8 µm et présentent un rapport longueur/diamètre L/D supérieur ou égal à 15, et
- au moins une particule minérale.

2. Association selon la revendication précédente, **caractérisée en ce que** les microfibrilles présentent un diamètre moyen inférieur à 0,5 µm.

3. Association selon l'une quelconque des revendications 1 ou 2, **caractérisée en ce que** les microfibrilles présentent un diamètre moyen compris entre 0,5 et 10 nm.

4. Association selon l'une quelconque des revendications précédentes, **caractérisée en ce que** le rapport L/D est supérieur ou égal à 20, de préférence supérieur ou égal à 100.

5. Association selon l'une quelconque des revendications précédentes, **caractérisée en ce que** les microfibrilles présentent un diamètre moyen et un facteur de forme tels que leur longueur moyenne reste toujours inférieure à 30 µm.

6. Association selon l'une quelconque des revendications 1 à 5, **caractérisée en ce que** les microfibrilles sont des microfibrilles céramiques.

7. Association selon l'une quelconque des revendications 1 à 5, **caractérisée en ce que** les microfibrilles sont des microfibrilles d'amiante, de titanate, d'alumine ou de dihydroxycarbonate d'aluminium et/ou de magnésium.

8. Association selon l'une quelconque des revendications 1 à 5, **caractérisée en ce que** les microfibrilles sont des microfibrilles de carbone, éventuellement creuses.

9. Association selon l'une quelconque des revendications 1 à 5, **caractérisée en ce que** les microfibrilles sont des microfibrilles organiques, comme des microfibrilles d'alcools polyvinyliques, de polyamides, de cellulose.

10. Association selon la revendication 9, **caractérisée en ce que** les microfibrilles sont des microfibrilles de cellulose.

11. Association selon la revendication précédente, **caractérisée en ce que** les microfibrilles de cellulose sont d'origine végétale, bactérienne ou encore animale.

12. Association selon l'une quelconque des revendications précédentes, **caractérisée en ce que** les microfibrilles présentent un taux de cristallinité inférieur ou égal à 50 %.

13. Association selon la revendication précédente, **caractérisée en ce que** les microfibrilles sont issues de cellules constituées d'au moins 80% de parois primaires.

14. Association selon l'une quelconque des revendications précédentes, **caractérisée en ce que** les microfibrilles sont chargées en surface en acides carboxyliques et en polysaccharides acides, seuls ou en mélange.

15. Association selon l'une quelconque des revendications précédentes, **caractérisée en ce que** les microfibrilles sont associées à au moins un additif choisi parmi la cellulose carboxylée, les polysaccharides naturels et les polyols.

16. Association selon la revendication précédente **caractérisée en ce que** les microfibrilles de cellulose sont associées à au moins un co-additif choisi parmi:
- les monomères ou oligomères osidiques;
- les composés de formule (R¹R²N)COA, formule dans laquelle R¹ ou R², identiques ou différents, représentent l'hydrogène ou un radical alkyle en C₁-C₁₀, A représente l'hydrogène, un radical alkyle en C₁-C₁₀, ou encore le groupement R'¹R'²N avec R'¹, R'², identiques ou différents, représentant l'hydrogène ou un radical alkyle en C₁-C₁₀;
- les tensioactifs cationiques ou amphotères ;
ces additifs pouvant être utilisés seuls ou en mélange.

17. Association selon l'une quelconque des revendications 1 à 16, **caractérisées en ce que** les microfibrilles de cellulose sont traitées en surface de façon à ce qu'elles portent un revêtement de polypyrrole.

18. Association selon l'une quelconque des revendications précédentes, **caractérisée en ce que** les particules minérales sont choisies parmi les oxydes, hydroxydes, hydroxycarbonates, ou leurs combinaisons, d'éléments des colonnes IIA, IIB, IIIB, IVA, IVB, VB de la classification périodique des éléments.

19. Association selon la revendication précédente, **caractérisée en ce que** les particules minérales sont des oxydes, hydroxydes, hydroxycarbonates ou leurs combinaisons, de titane, d'aluminium, de silicium, de zinc, de calcium, de magnésium, ou leurs mélanges.

20. Association selon l'une quelconque des revendications 1 à 17, **caractérisée en ce que** les particules minérales sont choisies parmi les carbonates, les hydrogénocarbonates, les phosphates de métaux alcalins ou alcalino-terreux, ou leurs mélanges.

21. Association selon l'une quelconque des revendications 1 à 17, **caractérisée en ce que** les particules minérales sont choisies parmi les composés du cérium ou du lanthane.

22. Association selon l'une quelconque des revendications 1 à 17, **caractérisée en ce que** les particules minérales sont du carbure de silicium.

23. Association selon l'une quelconque des revendications 1 à 17, **caractérisée en ce que** les particules minérales sont des particules de noir de carbone.

24. Association selon l'une quelconque des revendications 1 à 17, **caractérisée en ce que** les particules minérales comprennent du carbone dans leur molécule, et sont recouvertes par au moins un composé choisi parmi les oxydes, hydroxydes ou hydroxycarbonates d'éléments des colonnes IIA, IIB, IIIB, IVA, IVB, VB de la classification périodique des éléments, les carbonates, les hydrogénocarbonates, les phosphates de métaux alcalins ou alcalino-terreux, ou encore le carbure de silicium.

25. Association selon l'une quelconque des revendications précédentes, **caractérisée en ce que** les particules minérales présentent une surface spécifique supérieure à 30 m²/g, de préférence comprise entre 50 et 400 m²/g.

26. Association selon l'une quelconque des revendications précédentes, **caractérisée en ce que** la quantité de microfibrilles, est comprise entre 0,1 et 100 g, plus particulièrement entre 1 et 10 g, par rapport à 100 g de particules minérales.

27. Association selon l'une quelconque des revendications précédentes, se présentant sous forme sèche, comprenant des microfibrilles dont le diamètre moyen est inférieur à 0,8 µm et au moins une particule minérale, susceptible d'être obtenue en préparant une suspension comprenant les microfibrilles et les particules minérales, que l'on sèche.

28. Procédé de préparation d'une association selon l'une quelconque des revendications 1 à 26, **caractérisé en ce que** l'on prépare une suspension comprenant les microfibrilles et les particules minérales, que l'on sèche.

29. Utilisation de l'association selon l'une quelconque des revendications 1 à 27 dans les polymères.

30. Utilisation de l'association selon la revendication précédente, **caractérisée en ce que** le polymère est choisi parmi les élastomères, les polymères ou copolymères présentant une température de transition vitreuse est comprise entre -150°C et +20°C, leurs alliages ou leurs mélanges.

31. Article à base de polymères, comprenant l'association selon l'une quelconque de revendications 1 à 27.

32. Article selon la revendication 31, **caractérisé en ce qu'**il est à base d'élastomères, de polymères ou copolymères présentant une température de transition vitreuse est comprise entre -150°C et +20°C, leurs alliages ou leurs mélanges.

33. Article à base de polymères selon l'une des revendications 31 ou 32, **caractérisé en ce qu'**il est en élastomère et utilisable en tant que revêtement de sols, support moteurs, pièce de chenilles de véhicules, semelle de chaussures, galet de téléphérique, joint d'appareillages électroménagers, gaine, câble, courroie de transmission.

34. Pneumatique à base d'élastomères, de polymères ou copolymères, dont au moins l'une des parties comprend l'association selon l'une quelconque des revendications 1 à 27.

35. Pneumatique selon la revendication 34, **caractérisé en ce que** la teneur en association est telle que la teneur en microfibrilles dans la partie concernée du pneumatique est comprise entre 0,1 et 20 g pour 100 g d'élastomères, de polymères ou copolymères.

36. Séparateur de batterie à base de polymère, **caractérisé en ce qu'**il comprend l'association selon l'une quelconque des revendications 1 à 27.

## Claims

1. An association in the dry form, comprising:
• microfibrils with a mean diameter of less than 0.8 µm and with a length/diameter ratio L/D of 15 or more; and
• at least one mineral particle.

2. An association according to the preceding claims, **characterized in that** the mean diameter of the microfibrils is less than 0.5 µm.

3. An association according to claim 1 or claim 2, **characterized in that** the mean diameter of the microfibrils is in the range 0.5 to 10 nm.

4. An association according to any one of the preceding claims, **characterized in that** the L/D ratio is 20 or more, preferably 100 or more.

5. An association according to any one of the preceding claims, **characterized in that** the mean diameter of the microfibrils and their form factor are such that their mean length is always less than 30 µm.

6. An association according to any one of claims 1 to 5, **characterized in that** the microfibrils are ceramic microfibrils.

7. An association according to any one of claims 1 to 5, **characterized in that** the microfibrils are microfibrils of asbestos, titanate, alumina or aluminium and/or magnesium dihydroxycarbonate.

8. An association according to any one of claims 1 to 5, **characterized in that** the microfibrils are carbon microfibrils that are optionally hollow.

9. An association according to any one of claims 1 to 5, **characterized in that** the microfibrils are organic microfibrils, such as microfibrils of polyvinyl alcohols, polyamides or cellulose.

10. An association according to claim 9, **characterized in that** the microfibrils are cellulose microfibrils.

11. An association according to the preceding claim, **characterized in that** the cellulose microfibrils are of plant, bacterial or animal origin.

12. An association according to any one of the preceding claims, **characterized in that** the degree of crystallinity of the microfibrils is 50% or less.

13. An association according to the preceding claims, **characterized in that** the microfibrils originate from cells at least 80% of which is constituted by primary walls.

14. An association according to any one of the preceding claims, **characterized in that** the surface of the microfibrils is charged with carboxylic acids and acid polysaccharides, used alone or as a mixture.

15. An association according to any one of the preceding claims, **characterized in that** the microfibrils are associated with at least one additive selected from carboxylated cellulose, natural polysaccharides and polyols.

16. An association according to the preceding claim, **characterized in that** the cellulose microfibrils are associated with at least one co-additive selected from:
• osidic monomers or oligomers;
• compounds with formula (R¹R²N)COA, in which R¹ or R², which may be identical or different, represent hydrogen or a C₁-C₁₀ alkyl radical, A represents hydrogen, a C₁-C₁₀ alkyl radical, or the group R'¹R'²N, where R'¹ and R'², which may be identical or different, represent hydrogen or a C₁-C₁₀ alkyl radical;
• cationic or amphoteric surfactants;
these co-additives being used alone or as a mixture.

17. An association according to any one of claims 1 to 16, **characterized in that** the cellulose microfibrils are surface treated to carry a polypyrrole coating.

18. An association according to any one of the preceding claims, **characterized in that** the mineral particles are selected from oxides, hydroxides or hydroxycarbonates, or combinations thereof, of elements from groups IIA, IIB, IIIB, IVA, IVB, VB of the periodic table.

19. An association according to the preceding claims, **characterized in that** the mineral particles are oxides, hydroxides, hydroxycarbonates or combinations thereof of titanium, aluminium, silicon, zinc, calcium or magnesium, or mixtures thereof.

20. An association according to any one of claims 1 to 17, **characterized in that** the mineral particles are selected from alkali metal or alkaline-earth metal carbonates, bicarbonates and phosphates, or mixtures thereof.

21. An association according to any one of claims 1 to 17, **characterized in that** the mineral particles are selected from cerium or lanthanum compounds.

22. An association according to any one of claims 1 to 17, **characterized in that** the mineral particles are silicon carbide.

23. An association according to any one of claims 1 to 17, **characterized in that** the mineral particles are carbon black particles.

24. An association according to any one of claims 1 to 17, **characterized in that** the mineral particles comprise carbon in their molecule, and are coated with at least one compound selected from oxides, hydroxides and hydroxycarbonates of elements from groups IIA, IIB, IIIB, IVA, IVB, VB of the periodic table, and from alkali metal or alkaline-earth metal carbonates, bicarbonates and phosphates, and from silicon carbide.

25. An association according to any one of the preceding claims, **characterized in that** the specific surface area of the mineral particles is more than 30 m²/g, preferably in the range 50 to 400 m²/g.

26. An association according to any one of the preceding claims, **characterized in that** the quantity of microfibrils is in the range 0.1 to 100 g, more particularly in the range 1 to 10 g, with respect to 100 g of mineral particles.

27. An association according to any one of the preceding claims, in its dry form, comprising microfibrils with a mean diameter of less than 0.8 µm and at least one mineral particle, which can be obtained by preparing a suspension comprising microfibrils and mineral particles, which is then dried.

28. A process for preparing an association according to any one of claims 1 to 26, **characterized in that** a suspension is prepared comprising microfibrils and mineral particles, which is then dried.

29. Use of an association according to any one of claims 1 to 27 in polymers.

30. Use according to the preceding claim, **characterized in that** the polymer is selected from elastomers, polymers and copolymers with a glass transition temperature in the range -150°C to +20°C, from their alloys or from mixtures thereof.

31. A polymer-based article, comprising the association according to any one of claims 1 to 27.

32. An article according to claim 31, **characterized in that** it is based on elastomers, polymers or copolymers with a glass transition temperature in the range -150°C to +20°C, on their alloys or on mixtures thereof.

33. A polymer-based article according to claim 31 or claim 32, **characterized in that** it is an elastomer and for use as a floor coating, an engine support, a vehicle track part, a shoe sole, a cableway roller, a seal for domestic electrical appliances, a sleeve, cable, or a drive belt.

34. A tyre based on elastomers, polymers or copolymers, at least one of its parts comprising the association according to any one of claims 1 to 27.

35. A tyre according to claim 34, **characterized in that** the amount of said association is such that the amount of microfibrils in the part concerned of the tyre is in the range 0.1 to 20 g per 100 g of elastomers, polymers or copolymers.

36. A polymer-based plate separator, **characterized in that** it comprises the association according to any one of claims 1 to 27.

## Patentansprüche

1. Assoziation in trockener Form, umfassend:
- Mikrofibrillen, die einen mittleren Durchmesser geringer als 0,8 µm aufweisen, und die ein Längen/Durchmesser-L/D-Verhältnis über oder gleich 15 aufweisen, und
- wenigstens ein mineralisches Teilchen.

2. Assoziation gemäß dem vorhergehenden Anspruch, **dadurch gekennzeichnet, dass** die Mikrofibrillen einen mittleren Durchmesser geringer als 0,5 µm aufweisen.

3. Assoziation gemäß einem der Ansprüche 1 oder 2, **dadurch gekennzeichnet, dass** die Mikrofibrillen einen mittleren Durchmesser zwischen 0,5 und 10 nm aufweisen.

4. Assoziation gemäß einem der vorhergehenden Ansprüche, **dadurch gekennzeichnet, dass** das L/D-Verhältnis über oder gleich 20 ist, bevorzugt über oder gleich 100.

5. Assoziation gemäß einem der vorhergehenden Ansprüche, **dadurch gekennzeichnet, dass** die Mikrofibrillen einen mittleren Durchmesser und einen Formfaktor solchermaßen aufweisen, dass ihre mittlere Länge immer unter 30 µm bleibt.

6. Assoziation gemäß einem der Ansprüche 1 bis 5, **dadurch gekennzeichnet, dass** die Mikrofibrillen keramische Mikrofibrillen sind.

7. Assoziation gemäß einem der Ansprüche 1 bis 5, **dadurch gekennzeichnet, dass** die Mikrofibrillen Asbest-Mikrofibrillen, Titanat-Mikrofibrillen, Aluminiumoxid-Mikrofibrillen oder Aluminium- und/oder Magnesiumdihydroxycarbonat-Mikrofibrillen sind.

8. Assoziation gemäß einem der Ansprüche 1 bis 5, **dadurch gekennzeichnet, dass** die Mikrofibrillen Kohlenstoff-Mikrofibrillen sind, gegebenenfalls hohle.

9. Assoziation gemäß einem der Ansprüche 1 bis 5, **dadurch gekennzeichnet, dass** die Mikrofibrillen organische Mikrofibrillen sind, wie Mikrofibrillen von Polyvinylalkoholen, von Polyamiden, von Cellulose.

10. Assoziation gemäß Anspruch 9, **dadurch gekennzeichnet, dass** die Mikrofibrillen Cellulose-Mikrofibrillen sind.

11. Assoziation gemäß dem vorhergehenden Anspruch, **dadurch gekennzeichnet, dass** die Cellulose-Mikrofibrillen pflanzlichen, bakteriellen oder wiederum tierischen Ursprungs sind.

12. Assoziation gemäß einem der vorhergehenden Ansprüche, **dadurch gekennzeichnet, dass** die Mikrofibrillen eine Kristallinitätsrate kleiner oder gleich 50 % aufweisen.

13. Assoziation gemäß dem vorhergehenden Anspruch, **dadurch gekennzeichnet, dass** die Mikrofibrillen von Zellen abstammen, die aus mindestens 80 % primäre Zellwände bestehen.

14. Assoziation gemäß einem der vorhergehenden Ansprüche, **dadurch gekennzeichnet, dass** die Mikrofibrillen an der Oberfläche mit Carbonsäuren und sauren Polysacchariden geladen sind, einzeln oder als Mischung.

15. Assoziation gemäß einem der vorhergehenden Ansprüche, **dadurch gekennzeichnet, dass** die Mikrofibrillen mit mindestens einem Zusatzstoff assoziiert sind, der aus der carboxylierten Cellulose, den natürlichen Polysacchariden und den Polyolen ausgewählt ist.

16. Assoziation gemäß dem vorhergehenden Anspruch, **dadurch gekennzeichnet, dass** die Cellulose-Mikrofibrillen an wenigstenss einen Co-Zusatzstoff assoziiert sind, ausgewählt unter:
- die saccharidischen Monomere oder Oligomere;
- die Verbindungen der Formel (R¹R²N)COA, eine Formel, in der R¹ oder R², gleich oder verschieden, einen Wasserstoff oder ein Alkylradikal C₁-C₁₀ darstellen, A einen Wasserstoff darstellt, ein Alkylradikal C₁-C₁₀, oder wiederum die Gruppe R'¹R'²N mit R'¹, R'², gleich oder verschieden, die einen Wasserstoff oder ein Alkylradikal C₁-C₁₀ darstellen;
- die kationischen oder amphoteren grenzflächenaktiven Stoffe;
diese Zusatzstoffe können einzeln oder als Mischung eingesetzt werden.

17. Assoziation gemäß einem der Ansprüche 1 bis 16, **dadurch gekennzeichnet, dass** die Cellulose-Mikrofibrillen an der Oberfläche auf eine Weise behandelt werden, dass sie einen Polypyrrolüberzug tragen.

18. Assoziation gemäß einem der vorhergehenden Ansprüche, **dadurch gekennzeichnet, dass** die mineralischen Teilchen aus den Oxiden, Hydroxiden, Hydroxycarbonaten, oder deren Kombinationen, der Elemente der Gruppen IIA, IIB, IIIB, IVA, IVB, VB des Periodensystems der Elemente ausgewählt sind.

19. Assoziation gemäß dem vorhergehenden Anspruch, **dadurch gekennzeichnet, dass** die mineralischen Teilchen Oxide, Hydroxide, Hydroxycarbonate oder deren Kombinationen von Titan, Aluminium, Silicium, Zink, Calcium, Magnesium, oder deren Mischungen, sind.

20. Assoziation gemäß einem der Ansprüche 1 bis 17, **dadurch gekennzeichnet, dass** die mineralischen Teilchen aus den Carbonaten, den Hydrogencarbonaten, den Phosphaten von Alkali- oder Erdalkalimetallen, oder deren Mischungen, ausgewählt werden.

21. Assoziation gemäß einem der Ansprüche 1 bis 17, **dadurch gekennzeichnet, dass** die mineralischen Teilchen aus den Ceriumverbindungen oder den Lanthanverbindungen ausgewählt werden.

22. Assoziation gemäß einem der Ansprüche 1 bis 17, **dadurch gekennzeichnet, dass** die mineralischen Teilchen aus Siliciumcarbid sind.

23. Assoziation gemäß einem der Ansprüche 1 bis 17, **dadurch gekennzeichnet, dass** die mineralischen Teilchen Ruß-Teilchen sind.

24. Assoziation gemäß einem der Ansprüche 1 bis 17, **dadurch gekennzeichnet, dass** die mineralischen Teilchen in ihrem Molekül Kohlenstoff ausweisen, und mit wenigstens einer Verbindung überzogen sind, die aus den Oxiden, Hydroxiden oder Hydroxycarbonaten der Elemente der Gruppen IIA, IIB, IIIB, IVA, IVB, VB des Periodensystems der Elemente, der Carbonate, der Hydrogencarbonate, der Phosphate von Alkali- oder Erdalkalimetallen, oder wiederum Siliciumcarbid ausgewählt ist.

25. Assoziation gemäß einem der vorhergehenden Ansprüche, **dadurch gekennzeichnet, dass** die mineralischen Teilchen eine spezifische Oberfläche über 30 m²/g aufweisen, bevorzugt zwischen 50 und 400 m²/g.

26. Assoziation gemäß einem der vorhergehenden Ansprüche, **dadurch gekennzeichnet, dass** die Menge an Mikrofibrillen zwischen 0,1 und 100 g liegt, insbesondere zwischen 1 und 10 g, bezogen auf 100 g der mineralischen Teilchen.

27. Assoziation gemäß einem der vorhergehenden Ansprüche, die in fester Form vorliegt, und Mikrofibrillen mit einem mittleren Durchmesser geringer als 0,8 µm und wenigstens ein mineralisches Teilchen umfasst, wobei sie durch Herstellen einer Suspension, die die Mikrofibrillen und die mineralischen Teilchen umfasst, die getrocknet wird, erhalten werden kann.

28. Herstellungsverfahren einer Assoziation gemäß einem der Ansprüche 1 bis 26, **dadurch gekennzeichnet, dass** man eine Suspension, die die Mikrofibrillen und die mineralischen Teilchen umfasst, herstellt, die getrocknet wird.

29. Verwendung der Assoziation gemäß einem der Ansprüche 1 bis 27 in den Polymeren.

30. Verwendung der Assoziation gemäß dem vorhergehenden Anspruch, **dadurch gekennzeichnet, dass** das Polymer unter den Elastomeren, den Polymeren oder Copolymeren mit einer Glasübergangstemperatur zwischen -150°C und +20°C, deren Legierungen oder deren Mischungen, ausgewählt wird.

31. Gegenstand auf Polymerenbasis, umfassend die Assoziation gemäß einem der Ansprüche 1 bis 27.

32. Gegenstand gemäß dem Anspruch 31, **dadurch gekennzeichnet, dass** er auf Basis von Elastomeren, Polymeren oder Copolymeren mit einer Glasübergangstemperatur zwischen -150°C und +20°C, deren Legierungen oder deren Mischungen ist.

33. Gegenstand auf Polymerenbasis gemäß einem der Ansprüche 31 oder 32, **dadurch gekennzeichnet, dass** er aus Elastomer ist und als Bodenbelag, Motoraufhängung, Teil von Fahrzeugraupen, Schuhsohle, Seilbahnlaufrolle, Elektrohaushaltsgerätedichtung, Hülle, Kabel, Treibriemen verwendet werden kann.

34. Reifen auf Elastomerenbasis, Polymerenbasis oder Copolymerenbasis, von dem wenigstens einer der Bestandteile eine Assoziation gemäß einem der Ansprüche 1 bis 27 umfasst.

35. Reifen gemäß Anspruch 34, **dadurch gekennzeichnet, dass** der Gehalt an Assoziation solchermaßen ist, dass der Gehalt an Mikrofibrillen in dem betreffenden Bestandteil des Reifens zwischen 0,1 und 20 g pro 100 g Elastomeren, Polymeren oder Copolymeren liegt.

36. Batterie-Separator auf Polymerbasis, **dadurch gekennzeichnet, dass** er die Assoziation gemäß einem der Ansprüche 1 bis 27 umfasst.
